# EUROPEAN PATENT APPLICATION

(11) **EP 0 838 624 A1**
(43) Date of publication of application: **29.04.1998**
(21) Application number: 97202103.4
(22) Date of filing: 08.07.1997
(51) Int. Cl.: F16L 33/207

(54) **Method of affixing end fittings to hoses**

(30) Priority: 22.10.1996 GB 9621942
(71) Applicant: AFLEX HOSE LIMITED, Brighouse, West Yorkshire HD6 1EJ (GB)
(72) Inventor: Shields, David Hugh, Bolton, Lancashire BL7 9XD (GB)
(74) Representative: Wharton, Peter Robert

(57) **Abstract**

A method of affixing an end fitting (12) to a hose (10) comprises inserting a spigot (14) of the end fitting internally into the end of the hose and crimping an external ferrule (16) over the hose and spigot portion, the spigot having an annular raised shoulder (23), characterised in that the ferrule (16) is provided with an externally relieved portion (26) in the area of the annular shoulder and is capable of being crimped in place using a standard crimp tool. The ferrule design of the invention overcomes the price disadvantage of prior art proposals since the production of an external relieved portion (26) is much cheaper than an internal groove. Moreover, a standard straight crimp tool can be used. The relieved portion is preferably in the form of an approximately hemispherical (in section) groove which allows satisfactory crimping, sealing and locking to take place with use of standard straight crimp tooling despite the fact that the groove is external rather than internal. The hose is clamped to the spigot of the end fitting and ferrule is independently locked on to the annular shoulder of the spigot.

## Description

This invention relates to a method of affixing end fittings to hoses and in particular relates to an improved ferrule for this purpose.

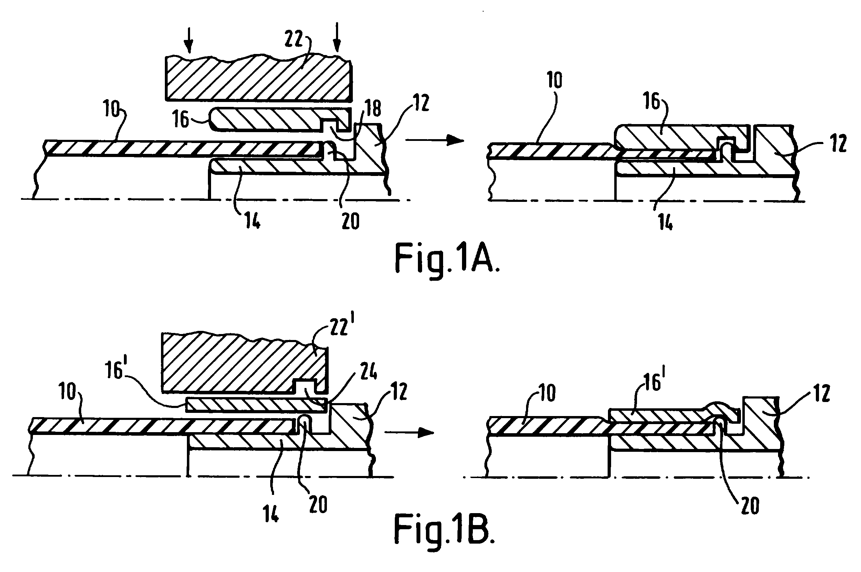

For many types of hoses and end fittings it is common to secure the end fitting to the hose by externally crimping or swaging a ferrule over the hose end so that it compresses the hose onto a portion, or spigot, of the end fitting internally of the hose in such a way that the hose is clamped and sealed to the end fitting. In addition, it is necessary to provide that the the ferrule is also mechanically locked onto the spigot, to ensure that the spigot cannot be independently blown out by internal pressure in the hose. The basic procedure is illustrated in figure 1(a) of the accompanying drawings wherein a hose 10 is affixed to an end fitting 12 having a spigot portion 14 fitting internally of the hose end. A circumferential ferrule 16 is provided with an internal groove 18 which corresponds with an annular raised shoulder portion 20 on the spigot 14. When the ferrule is crimped by means of crimp tool 22, the groove 18 and shoulder 20 lock together both sealing the hose to the end fitting 12 and ensuring that the end fitting cannot be pulled out. It is, however, expensive to machine an internal groove on the ferrule 16.

An alternative proposal (figure 1B of the accompanying drawings) is to have a ferrule 16' in the form of a plain tube, i.e. without an internal groove and, instead, the crimped tool 22' is provided with a groove 24 which crimps the ferrule about the annular shoulder 20 on the spigot 14 of the end fitting 12. The problem here is that the crimping tool 22' has to have a special groove 24 in it and this has to be located precisely relative to the ferrule and shoulder to ensure a correctly formed crimp profile.

The invention seeks to provide a method of securing an end fitting to a hose, and a ferrule therefor, improved in the above respects.

According to the present invention there is provided a method of affixing an end fitting to a hose by inserting a spigot of the end fitting internally into the end of the hose and crimping an external ferrule over the hose and spigot portion, the spigot having an annular raised shoulder, characterised in that the ferrule is provided with an externally relieved portion in the area of the annular shoulder and is capable of being crimped in place using a standard crimp tool.

The invention further provides a ferrule having an externally relieved portion towards one end thereof which is capable of being crimped in place using a standard crimp tool.

The ferrule design of the invention overcomes the price disadvantage of the first prior proposal discussed above since the production of an external relieved portion is much cheaper than an internal groove. Moreover, a standard straight crimp tool can be used which is an advantage over the second of the prior proposals indicated above.

It has been unexpectedly found that the relieved portion, especially when it is in the form of an approximately hemispherical (in section) groove, allows satisfactory crimping, sealing and locking to take place with use of standard straight crimped tooling despite the fact that the groove is external rather than internal. The hose is clamped to the spigot of the end fitting and ferrule is independently locked on to the annular shoulder of the spigot.

The invention will be described further, by way of example, with reference to the accompanying drawings, in which:
Figures 1A and 1B are diagrammatic side views, partially in section, of prior art proposals; and
Figure 2 is a similar view to Figure 1 of the method of the invention.

Referring to the drawings, both figures 1A and 1B have been described above in relation to the prior art.

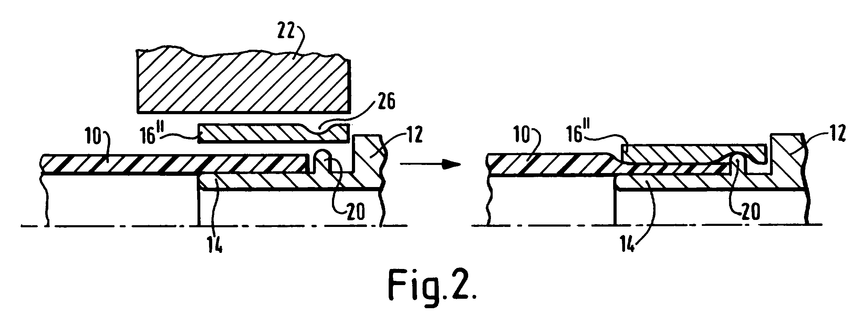

Referring now to figure 2, using like numerals for like parts, it can be seen that a hose 10 is affixed to an end fitting 12 which has a spigot portion 14 which fits internally of the end of the hose 10. Spigot 14 has an annular raised shoulder 20. A ferrule 16'' is provided having an external hemispherically shaped groove 26 machined in it.

A standard straight crimp tool 22 can then be used to crimp the ferrule 16'' to the configuration shown on the right hand side of figure 2 from which it will be seen that the portion of the ferrule in the area of the groove 26 deforms so that the ferrule 16'' is locked on to the annular shoulder 20.

It has been found that the method and ferrule of the invention meet the necessary test criteria, namely that the hose should burst under the effects of internal hydrostatic pressure before any leakage occurs at the end fitting and without the end fitting blowing off before hose burst pressure is reached.

The method and ferrule of the invention are cheaper and easier to use than the prior proposals and yet meet the necessary performance criteria.

## Claims

1. A method of affixing an end fitting to a hose by inserting a spigot of the end fitting internally into the end of the hose and crimping an external ferrule over the hose and spigot portion, the spigot having an annular raised shoulder, characterised in that the ferrule is provided with an externally relieved portion in the area of the annular shoulder and is capable of being crimped in place using a standard crimp tool.

2. A method as claimed in claim 1 wherein the relieved portion is in the form of an approximately hemispherical (in section) groove.

3. A ferrule having an externally relieved portion towards one end thereof which is capable of being crimped in place using a standard crimp tool.

4. A ferrule a claimed in claim 3 wherein the relieved portion is in the form of an approximately hemispherical (in section) groove.
